# EUROPÄISCHE PATENTSCHRIFT

(11) **EP 2 961 106 B1**
(45) Veröffentlichungstag und Bekanntmachung des Hinweises auf die Patenterteilung: **04.04.2018**
(21) Anmeldenummer: 15173580.0
(22) Anmeldetag: 24.06.2015
(51) Int. Cl.: H04L 12/423

(54) **NETZWERK, KOPF-TEILNEHMER UND DATENÜBERTRAGUNGSVERFAHREN**
NETWORK, HEAD SUBSCRIBER AND DATA TRANSMISSION METHOD
RÉSEAU, ABONNÉ DE TÊTE ET PROCÉDÉ DE TRANSMISSION DE DONNÉES

(30) Priorität: 27.06.2014 DE 102014109060
(43) Veröffentlichungstag der Anmeldung: 30.12.2015
(73) Patentinhaber: Beckhoff Automation GmbH, 33415 Verl (DE)
(72) Erfinder: Bunte, Thorsten, 33335 Gütersloh (DE); Büttner, Holger, 12157 Berlin (DE); Vonnahme, Erik, 33154 Salzkotten (DE); Janssen, Dirk, 33415 Verl (DE); Rettig, Thomas, 33378 Rheda-Wiedenbrück (DE); Beckhoff, Hans, 33415 Verl (DE)
(74) Vertreter: Patentanwaltskanzlei WILHELM & BECK

(56) Entgegenhaltungen:
- EP-A1- 1 860 821
- EP-A1- 2 439 885
- DE-A1-102006 046 841
- US-A1- 2005 198 373

## Beschreibung

Die Erfindung betrifft ein Netzwerk mit einem Steuerknoten und einer Mehrzahl von Netzwerk-Teilnehmern, die über einen geschlossenen ringförmigen Datenpfad mit dem Steuerknoten verbunden sind, der die Netzwerk-Teilnehmer sowohl auf dem Hinweg als auch auf dem Rückweg durchläuft. Die Erfindung betrifft ferner einen Kopf-Teilnehmer, der den Abschluss der Kette aus Netzwerk-Teilnehmern ausgehend vom Steuerknoten bildet. Ferner betrifft die Erfindung ein Datenübertragungsverfahren für ein solches Netzwerk.

In der Industrieautomation werden zur Kommunikation zwischen der Sensor-/Aktorebene und der Steuerungsebene serielle Bussysteme eingesetzt. An solche seriellen Bussysteme, in der Industrieautomation auch Feldbusse genannt, werden hohe Kommunikationsanforderungen in Bezug auf die Übertragungsgeschwindigkeit und die Fehlerfreiheit gestellt. Zwischen der Sensor-/Aktorebene und der Steuerungsebene werden in Echtzeit Prozess-Zustände, d. h. Sensordaten und Aktorbefehle übermittelt. Dieser Datenaustausch erfolgt in der Regel zyklisch. Neben einem solchen zyklischen Datenaustausch werden aber auch noch azyklische Daten zwischen der Sensor-/Aktorebene und der Steuerungsebene übertragen, um z. B. Parameter an die Geräte der Sensor-/Aktorebene zu übergeben oder Statusdaten abzufragen.

Der Datenaustausch auf einem Feldbus wird in der Regel auf der Grundlage des Master-Slave-Prinzips ausgeführt. Die aktiven Busteilnehmer, im Allgemeinen die Steuerknoten der Steuerungsebene, sind in Besitz einer Buszugriffsberechtigung und bestimmen den Datentransfer. Die Sensoren und Aktoren stellen dagegen üblicherweise die passiven Busteilnehmer dar. Sie erhalten keine Buszugriffsberechtigung, d. h. sie dürfen nur empfangene Informationssignale quittieren oder auf Anfrage eines Steuerknotens Informationssignale an diesen übermitteln.

Die Informationssignale werden von den Steuerknoten im Allgemeinen in Form von Datentelegrammen versendet, die sich aus Steuerdaten und Nutzdaten zusammensetzen, wobei die Datentelegramme vorzugsweise gemäß dem Ethernet-Standard aufgebaut sind. Die an den Bus angeschlossenen Sensoren und Aktoren verarbeiten die für das jeweilige Gerät bestimmten Nutzdaten der von dem Steuerknoten auf den Bus eingespeisten Datentelegramme.

Feldbussysteme mit einer Master-Slave-Struktur werden in der Regel, um eine aufwändige Verkabelung zu vermeiden, in Ringtopologie ausgeführt, wobei alle Netzwerk-Teilnehmer an einen ringförmigen Datenpfad angeschlossen sind. Ein von einem Steuerknoten erzeugtes Datentelegramm wird von dem Steuerknoten in den Datenpfad eingespeist und durchläuft nacheinander die seriell an den Datenpfad angeschlossenen weiteren Netzwerk-Teilnehmer, um dann wieder von dem Steuerknoten empfangen zu werden.

Um hohe Datenübertragungsraten im Netzwerk zu ermöglichen, wird vorzugsweise ein Voll-Duplex-Betrieb ausgeführt. Der ringförmige Datenpfad setzt sich dabei aus einem Hinweg und einem Rückweg zusammen, der die Netzwerk-Teilnehmer verbindet und so ein gleichzeitiges Senden und Empfangen durch die Netzwerk-Teilnehmer erlaubt. Das Netzwerk ist so ausgebaut, dass ausgehend vom Steuerknoten die Netzwerk-Teilnehmer eine Kette mit einem Kopf-Teilnehmer als Abschluss bilden, wobei der ringförmige Datenpfad die Netzwerk-Teilnehmer jeweils auf dem Hinweg und Rückweg durchläuft. Die Netzwerk-Teilnehmer können dann sowohl auf dem Hinweg als auch auf dem Rückweg einen Datenaustausch mit von dem Steuerknoten auf den Datenpfad eingespeisten Datentelegrammen durchführen.

Aufgrund der zunehmenden Datenübertragungsraten - bei Ethernet-Netzwerken wird vermehrt statt der üblichen Datenübertragungsrate von 100 Mbit/s eine Datenübertragungsrate von 1 Gbit/s verwendet - gewinnt die Laufzeit der Datentelegramme durch die Netzwerk-Teilnehmer für Datenaustausch-Geschwindigkeit zwischen der Sensor-/Aktorebene und der Steuerungsebene eine immer größere Bedeutung.

In der Industrieautomation erfolgt die Steuerung mit Hilfe eines Datenaustauschs über Netzwerke in der Regel so, dass der Steuerknoten zyklisch Steuerprozesse durchführt, um auf der Grundlage von Eingangsdaten der Sensor-/Aktorebene Ausgangsdaten für die Sensor-/Aktorebene zu ermitteln. Der Steuerknoten verschickt nach Abschluss eines Steuerprozesszyklus die Ausgangsdaten in Form von Datentelegrammen, wobei die Netzwerk-Teilnehmer die dem jeweiligen Netzwerk-Teilnehmer zugeordneten Ausgangsdaten auslesen und dann mit diesen Ausgangsdaten einen lokalen Netzwerk-Teilnehmerprozess ausführen. Die bei diesen lokalen Netzwerk-Teilnehmerprozessen ermittelten Daten werden dann von den Netzwerk-Teilnehmern an den Steuerknoten zurückgeschickt und anschließend als Eingangsdaten für den nächsten Steuerprozesszyklus vom Steuerknoten genutzt.

Das Einlesen der Ausgangsdaten aus den vom Steuerknoten ausgegebenen Datentelegrammen durch die Netzwerk-Teilnehmer erfolgt dabei auf dem Hinweg des Datenpfads. Die von den Netzwerk-Teilnehmern bereitgestellten Eingangsdaten werden auf dem Rückweg in dieses oder ein weiteres vom Steuerknoten versandtes Datentelegramm eingelesen und an den Steuerknoten rückgekoppelt. Da sich die Durchlaufzeit durch die Netzwerk-Teilnehmer, während der das Aus- und Einlesen der Daten erfolgt, nicht in gleichem Maße verkürzen lässt wie sich die Datenübertragungsrate im Netzwerk erhöht, wird die kürzeste Zykluszeit für einen Steuerprozess durch den Steuerknoten zunehmend bestimmt durch die sich aufgrund der Durchlaufzeit durch die Netzwerk-Teilnehmer ergebende Umlaufzeit der Datentelegramme auf dem ringförmigen Datenpfad.

Aus der DE 10 2004 063 213 A1 ist ein Netzwerk mit einem Steuerknoten und einer Mehrzahl Netzwerk-Teilnehmern bekannt, die über einen geschlossenen ringförmigen Datenpfad mit dem Steuerknoten verbunden sind, wobei die Netzwerk-Teilnehmer ausgehend vom Steuerknoten eine Kette mit einem Kopf-Teilnehmer als Abschluss der Kette bilden und der ringförmige Datenpfad die Netzwerk-Teilnehmer jeweils auf einem Hinweg und einem Rückweg durchläuft. Der Steuerknoten gibt Datentelegramme mit Kennungen auf den Datenpfad aus, wobei die Netzwerk-Teilnehmer mit auf dem ringförmigen Datenpfad durchlaufenden Datentelegrammen sowohl auf dem Hinweg als auch auf dem Rückweg einen Datenaustausch durchführen.

Aus der EP 2 439 885 A1 ist ein weiteres Netzwerk mit einem Steuerknoten und einer Mehrzahl Netzwerk-Teilnehmern bekannt, die über einen geschlossenen ringförmigen Datenpfad mit dem Steuerknoten verbunden sind. Der Steuerknoten gibt Datentelegramme mit Kennungen auf den Datenpfad aus, wobei die Netzwerk-Teilnehmer mit auf dem ringförmigen Datenpfad durchlaufenden Datentelegrammen einen Datenaustausch durchführen.

Aufgabe der vorliegenden Erfindung ist es, ein Netzwerk mit einem ringförmigen Datenpfad im Voll-Duplex-Betrieb und ein Datenübertragungsverfahren für ein solches Netzwerk bereitzustellen, mit dem sich die Zykluszeit von Steuerprozessen verkürzen lässt.

Diese Aufgabe wird mit einem Netzwerk gemäß Anspruch 1, einem Kopf-Teilnehmer zur Verwendung in einem solchen Netzwerk gemäß Anspruch 10 sowie einem Übertragungsverfahren gemäß Anspruch 11 gelöst. Bevorzugte Weiterbildungen sind in den abhängigen Ansprüchen angegeben.

Erfindungsgemäß ist in einem Netzwerk ein Steuerknoten mit einer Mehrzahl von Netzwerk-Teilnehmern über einen geschlossenen ringförmigen Datenpfad verbunden, wobei die Netzwerk-Teilnehmer ausgehend vom Steuerknoten eine Kette mit einem Kopf-Teilnehmer als Abschluss der Kette bilden. Der ringförmige Datenpfad durchläuft die Netzwerk-Teilnehmer auf einem Hinweg und einem Rückweg, wobei die Netzwerk-Teilnehmer ausgelegt sind, mit auf dem ringförmigen Datenpfad umlaufenden Datentelegrammen sowohl auf dem Hinweg als auch auf dem Rückweg einen Datenaustausch durchzuführen. Der Steuerknoten ist ferner so ausgelegt, dass er Datentelegramme mit einer Kennung auf dem Datenpfad ausgibt, wobei der Kopf-Teilnehmer der Kette eine Filterfunktion aufweist, um nach dem Durchlauf von Datentelegrammen durch den Kopf-Teilnehmer auf dem Hinweg anhand einer vorgegebenen Kennung den Weitertransport von Datentelegrammen mit der entsprechenden Kennung auf dem Rückweg zu blockieren. Der Kopf-Teilnehmer hat außerdem eine Sendefunktionalität, um zusätzlich Datentelegramme zu einem vorgegebenen Zeitpunkt auf dem Rückweg auszugeben.

Mit der Auslegung des Kopf-Teilnehmers in einem Netzwerk, das im Voll-Duplex-Modus betrieben wird, mit zwei zusätzlichen Funktionalitäten, einer Filterfunktionalität, mit der bestimmte Datentelegramme nach dem Durchlauf auf dem Hinweg des Datenpfads vom Datenpfad entfernt werden, und einer Sendefunktionalität, mit der zusätzliche Datentelegramme zu vorgegebenen Zeitpunkten auf den Rückweg des Datenpfads ausgegeben werden, kann die Durchlaufzeit von Prozessdaten eines Steuerzyklus im Netzwerk verkürzt werden.

Die Datentelegramme, die dazu dienen, Prozessdaten eines Steuerzyklus vom Steuerknoten auf die Netzwerk-Teilnehmer der Sensor-/Aktorebene zu übertragen, werden nicht mehr auf den Steuerknoten rückgekoppelt. Nach dem Durchlauf auf dem Hinweg des Datenpfads werden die Datentelegramme nämlich anhand ihrer Kennung vom Kopf-Teilnehmer ausgefiltert. Anstelle der vom Steuerknoten versandten Datentelegramme werden zum Einsammeln der Prozessdaten der Netzwerk-Teilnehmer auf dem Rückweg des Datenpfads eigenständige, vom Kopf-Teilnehmer auf den Rückweg ausgegebenen Datentelegramme genutzt.

Das Schreiben von Prozessdaten in die Sensor-/Aktorebene und das Auslesen von Prozessdaten aus der Sensor-/Aktorebene kann somit unabhängig voneinander erfolgen, da die zugehörigen Datentelegramme eigenständig sind und auf den verschiedenen Wegen des Datenpfads von den Netzwerk-Teilnehmer der Sensor-/ Aktorebene verarbeitet werden. Hierdurch ergibt sich die Möglichkeit, den Schreib- und Lesevorgang der Prozessdaten in der Sensor-/Aktorebene zum optimalen Zeitpunkt, z. B. auch überlappend auszuführen und damit die Durchlaufzeit der Prozessdaten für einen Steuerprozesszyklus zu verkürzen, wodurch sich schneller Steuerprozesse in der Industrieautomation durchführen lassen.

Dieser Vorteil ergibt sich insbesondere, wenn der Steuerknoten ausgelegt ist, zyklisch einen Steuerprozess durchzuführen, um auf der Grundlage von Eingangsdaten der Netzwerk-Teilnehmer Ausgangsdaten für die Netzwerk-Teilnehmer zu ermitteln, wobei der Steuerknoten nach Abschluss des Steuerprozesses die Ausgangsdaten in Form eines Schreib-Datentelegramms auf den Hinweg des Datenpfads ausgibt. Die Netzwerk-Teilnehmer lesen dann beim Durchlauf des Schreib-Datentelegramms auf dem Hinweg des Datenpfads die dem jeweiligen Netzwerk-Teilnehmer zugeordneten Ausgangsdaten aus dem Schreib-Telegramm aus. Jeder Netzwerk-Teilnehmer führt anschließend auf der Grundlage der Ausgangsdaten zyklisch einen lokalen Netzwerk-Teilnehmerprozess durch, wobei sich aus diesem Netzwerk-Teilnehmerprozess dann Eingangsdaten für den nächsten Steuerprozesszyklus des Steuerknotens ergeben.

Der Kopf-Teilnehmer der Kette blockiert nach dem Durchlauf des Schreib-Datentelegramms das Schreib-Datentelegramm und verhindert einen Weitertransport auf dem Rückweg des Datenpfads. Ferner gibt der Kopf-Teilnehmer zu einem vorgegebenen Zeitpunkt ein Lese-Datentelegramm auf dem Rückweg des Datenpfads aus, wobei die Netzwerk-Teilnehmer beim Durchlauf des Lese-Datentelegramms auf dem Rückweg des Datenpfads die Eingangsdaten des Netzwerk-Teilnehmers für den nächsten Steuerprozesszyklus in das Lese-Datentelegramm einschreiben. Da die Schreib-Datentelegramme den Rückweg des Datenpfads nicht blockieren, kann durch ein geeignetes Timing beim Aussenden des Lese-Datentelegramms durch den Kopf-Teilnehmer das Ein- und Auslesen der Daten in der Sensor-/Aktor-Ebene zeitlich überlappend erfolgen. Die Durchlaufzeit der für die Steuerprozesse des Steuerknotens notwendigen Prozessdaten kann somit verkürzt und damit die Zykluszeit des Steuervorgangs reduziert werden.

Der Zeitpunkt für das Ausgeben eines Lese-Datentelegramms auf den Rückweg des Datenpfads durch den Kopf-Teilnehmer wird vorzugsweise so gewählt, dass ein einem Netzwerk-Teilnehmer zugeordneter Datenbereich im Lese-Datentelegramm erst nach Abschluss des Netzwerk-Teilnehmerprozesses durch den entsprechenden Netzwerk-Teilnehmer hindurch läuft. Mit diesem zeitlich abgestimmten Aussenden des Lese-Datentelegramms durch den Kopf-Teilnehmer kann gewährleistet werden, dass zuverlässig die Eingangsdaten für den nächsten Steuerprozesszyklus des Steuerknotens abgeholt werden.

Eine Verkürzung der Durchlaufzeiten der Prozessdaten für einen Steuerprozess des Steuerknotens lässt sich weiterhin erreichen, indem der Steuerknoten die Ausgangsdaten für die Netzwerk-Teilnehmer in dem Schreib-Datentelegramm so anordnet, dass die Ausgangsdaten in umgekehrter Reihenfolge zur Reihenfolge der Netzwerk-Teilnehmer in der Kette entlang des Datenpfads, mit den Ausgangsdaten für den Kopf-Teilnehmer zuerst, sortiert sind. Mit dieser Sortierung der Ausgangsdaten im Schreib-Datentelegramm durchlaufen die den einzelnen Netzwerk-Teilnehmern zugeordneten Ausgangsdaten den Netzwerk-Teilnehmer im Wesentlichen zur gleichen Zeit. Die Netzwerk-Teilnehmer können deshalb ihre Ausgangsdaten im Wesentlichen gleichzeitig einlesen und den lokalen Netzwerk-Teilnehmerprozess starten. Es liegen dann auch die sich aus dem Netzwerk-Teilnehmerprozess ergebenen Eingangsdaten für den nächsten Steuerprozesszyklus des Steuerknotens frühzeitig vor und können mit Hilfe eines vom Kopf-Teilnehmer ausgesandten Lese-Datentelegramms abgeholt werden.

Der Steuerknoten ist ferner so ausgelegt, dass für die Ausgangsdaten jedes Netzwerk-Teilnehmers eine eigene Prüfsumme ermittelt und in dem Schreib-Datentelegramm zusammen mit den Ausgangsdaten jedes Netzwerk-Teilnehmers mit übertragen wird. Der Netzwerk-Teilnehmer kann dann nach Empfang seiner Ausgangsdaten anhand der Prüfsumme sofort entscheiden, ob die Datenübertragung fehlerfrei erfolgt ist und muss somit nicht auf den Durchlauf des gesamten Schreib-Datentelegramms warten, um diese Prüfung auszuführen und dann den entsprechenden Netzwerk-Teilnehmerprozess zu starten.

Vorteilhaft ist es weiterhin, wenn der Kopf-Teilnehmer die für die Netzwerk-Teilnehmer vorgesehenen Datenbereiche im Lese-Datentelegramm so anordnet, dass die Eingangsdaten des Netzwerk-Teilnehmers im Lese-Datentelegramm in der Reihenfolge der Netzwerk-Teilnehmer in der Kette, mit den Eingangsdaten des Kopf-Teilnehmers zuletzt, sortiert sind. Mit dieser Auslegung des Lese-Datentelegramms besteht die Möglichkeit, den Abholvorgang der von den Netzwerk-Teilnehmern für den nächsten Steuerzyklus des Steuerknotens bereitgestellten Eingangsdaten zeitlich zu optimieren, insbesondere wenn diese Eingangsdaten, die sich aus den lokalen Netzwerk-Teilnehmerprozessen ergeben, im Wesentlichen gleichzeitig bereitstehen. Die Eingangsdaten können dann im Wesentlichen parallel in das Lese-Datentelegramm eingekoppelt werden, wodurch sich die Prozessdaten-Durchlaufzeit und damit der Steuerzyklus weiter verkürzen lassen.

Als Sicherheitsmaßnahme zum Prüfen, ob die adressierten Netzwerk-Teilnehmer die Datentelegramme der Steuerknoten korrekt verarbeiten, sind die vom Steuerknoten ausgesandten Datentelegramme mit einem Registerfeld versehen, das einen Startwert enthält. Jeder Netzwerk-Teilnehmer ist so ausgelegt, dass er das Registerfeld bei einem Datenaustausch mit dem entsprechenden Datentelegramm inkrementiert. Der Kopf-Teilnehmer liest dann bei Datentelegrammen, die der Kopf-Teilnehmer auf dem Hinweg anhand der vorgegebenen Kennung am Weitertransport auf dem Rückweg blockiert, den Wert des Registerfeldes des blockierten Datentelegramms aus und speichert diesen Wert zwischen. Der zwischengespeicherte Wert wird dann zu einem späteren Zeitpunkt mit einem vom Kopf-Teilnehmer auf den Rückweg ausgegebenen Datentelegramm in den Steuerknoten versandt. Der Steuerknoten kann anhand des Werts des Registerfeldes dann feststellen, ob das vom Kopf-Teilnehmer ausgefilterte Datentelegramm von den Netzwerk-Teilnehmern korrekt bearbeitet wurde.

Im Kopf-Teilnehmer sind die zusätzlichen Funktionalitäten, d. h. die Filterfunktionalität und die Sendefunktionalität einstellbar. Dies erfolgt vorzugsweise über einen konfigurierbaren Telegrammspeicher des Kopf-Teilnehmers. Im Telegrammspeicher sind die Kennungen der Datentelegramme, deren Weiterleitung auf dem Rückweg des Datenpfads blockiert werden soll, und die vorgegebenen Zeitpunkte zum Ausgeben von Datentelegramme auf dem Rückweg enthalten. Mit diesem konfigurierbaren Telegrammspeicher besteht die Möglichkeit, dass der Steuerknoten den Kopf-Teilnehmer optimal auf den durchzuführenden Steuerprozess einstellt, um die Durchlaufzeit der Prozessdaten des Steuerprozesses auf den Datenpfad zu verkürzen.

Um Kollisionen von Datentelegrammen insbesondere auf dem Rückweg zu verhindern, weist der Kopf-Teilnehmer weiterhin einen Zwischenspeicher auf, der ausgelegt ist, azyklisch vom Steuerknoten versandte Datentelegramme zwischenzuspeichern, wenn das Weiterleiten des azyklisch vom Steuerknoten versandten Datentelegramms auf dem Rückweg des Datenpfads mit einem vom Kopf-Teilnehmer auf dem Rückweg zu versendenden Datentelegramm kollidiert. Mit dieser Vorgehensweise wird gewährleistet, dass der für die Echtzeitfähigkeit notwendige zyklische Datenaustausch zuverlässig und fehlerfrei durchgeführt werden kann.

Die Erfindung wird anhand der beigefügten Zeichnungen näher erläutert.
Figur 1 zeigt eine schematische Darstellung eines erfindungsgemäßen Netzwerks mit einem Steuerknoten und einer Kette aus acht Netzwerk-Teilnehmern, die über einen geschlossenen ringförmigen Datenpfad mit dem Steuerknoten verbunden sind;
Figur 2 zeigt eine erste Ausführungsform einer Ablaufsteuerung einer Datenübertragung in einem Netzwerk gemäß Figur 1;
Figur 3 zeigt eine zweite Ausführungsform einer Ablaufsteuerung einer Datenübertragung in einem Netzwerk gemäß Figur 1;
Figur 4 zeigt eine Ausführungsform eines Telegrammspeichers in einem Kopf-Teilnehmer; und
Figur 5 zeigt eine dritte Ausführungsform einer Ablaufsteuerung einer Datenübertragung in einem Netzwerk gemäß Figur 1.

In der Industrieautomation werden Netzwerke eingesetzt, um die verteilt angeordneten Geräte einer Aktor-/Sensor-Ebene mit der Steuerungsebene zu verbinden. Die Netzwerke, auch Feldbussysteme genannt, weisen in der Regel einen seriellen Bus auf, der beispielsweise eine elektrische Leitung, ein Lichtleiter oder ein Radiokabel sein kann. Am Bus sind alle Netzwerk-Teilnehmer angeschlossen, wobei zwischen aktiven und passiven Busteilnehmern unterschieden wird.

Die aktiven Netzwerk-Teilnehmer im Feldbussystem sind die Steuerknoten, die den Datenverkehr auf dem seriellen Bus regeln. Ein solcher Steuerknoten ist z. B. ein Industrie-PC, der als Prozessleitrechner in einer Fertigungsstraße dient. Die Steuerknoten besitzen eine Buszugriffsberechtigung und können Daten ohne externe Aufforderung auf den seriellen Bus ausgeben. Die passiven Netzwerk-Teilnehmer sind die Maschinenperipheriegeräte, z. B. E/A-Geräte, Ventile, Antriebe, Sensoren, Messumformer etc. Sie besitzen in der Regel keine Buszugriffsberechtigung, d. h. sie dürfen nur empfangene Daten quittieren und auf Aufforderung Daten über den Bus übermitteln.

Als Kommunikationsstandard zur Datenübertragung in Feldbussystemen wird vorzugsweise der Ethernet-Standard eingesetzt. Bei Ethernet-Netzwerken werden die zu übermittelnden Daten in Form von Datenpaketen, im Weiteren auch als Datentelegramme bezeichnet, verkapselt. Die Ethernet-Telegramme können dabei eine Datenlänge von bis zu 1500 Bytes aufweisen, wobei zusätzlich zu den Nutzdaten Steuerdaten, die eine Anfangskennung, eine Ziel- und Quelladresse, einen Datenpakettyp und einen Fehlermechanismus aufweisen, enthalten sind.

Eine bevorzugte Topologie bei Ethernet-Netzwerken ist das Ringbussystem, bei dem ein Datentelegramm ausgehend vom Steuerknoten durch alle Netzwerk-Teilnehmer am Bus geleitet wird, bevor es wieder beim Steuerknoten ankommt. Um hohe Datenübertragungsraten, insbesondere Gigabit-Datenübertragungsraten zu erreichen, werden Ethernet-Netzwerke vorzugsweise im Voll-Duplex-Modus betrieben. Der Datenpfad im Ethernet-Netzwerk weist hierzu eine getrennte Übertragung in Hin- und Rückrichtung auf, so dass den Netzwerk-Teilnehmern ein gleichzeitiges Senden und Empfangen ermöglicht wird.

Die Netzwerk-Teilnehmer bilden dabei ausgehend vom Steuerknoten eine Kette, wobei nach dem letzten Netzwerk-Teilnehmer, im Weiteren auch als Kopf-Teilnehmer bezeichnet, der Hinweg und der Rückweg des ringförmigen Datenpfads kurzgeschlossen sind. Die Netzwerk-Teilnehmer sind dann so ausgelegt, dass sie mit auf den ringförmigen Datenpfad durchlaufenden Datentelegrammen sowohl auf dem Hinweg als auch auf dem Rückweg einen Datenaustausch durchführen können. Ein solches nach dem Ethernet-Prinzip arbeitendes Feldbussystem ist z.B. der EtherCAT-Bus, anhand dem die Erfindung im Weiteren beschrieben werden soll. Die Erfindung kann jedoch auch bei anderen Bussystemen, insbesondere Feldbussystemen wie z. B. dem ProfiNet-System eingesetzt werden.

Um schnelle Regelungsvorgänge in der Automatisierungstechnik mit Hilfe eines Feldbussystems durchführen zu können, ist es Zielsetzung, kurze Durchlaufzeiten der Nutzdaten, die zwischen den Steuerknoten und den übrigen Netzwerk-Teilnehmern ausgetauscht werden, zu erreichen. Bei hohen Datenübertragungsraten auf dem seriellen Bus ist dabei zunehmend die Durchlaufzeit durch die Netzwerk-Teilnehmer der limitierende Faktor. Die kürzeste Zykluszeit für einen Steuerprozess hängt davon ab, wann der Steuerknoten basierend auf den Ausgangsdaten des vorherigen Zyklus die Eingangsdaten für den nächsten Zyklus erhält.

Am Ende eines Steuerzyklus gibt der Steuerknoten die Steuerprozess-Ausgangsdaten in Form eines Datentelegramms auf dem Hinweg des Datenpfads aus, wobei die Netzwerk-Teilnehmer beim Durchlauf auf dem Hinweg des Datenpfads die dem jeweiligen Netzwerk-Teilnehmer zugeordneten Ausgangsdaten einlesen. Der Netzwerk-Teilnehmer führt dann einen lokalen Netzwerk-Teilnehmerprozess auf der Grundlage der eingelesenen Ausgangsdaten aus, um Eingangsdaten für den nächsten Steuerprozesszyklus des Steuerknotens zu ermitteln. Diese Eingangsdaten werden dann üblicherweise von den Netzwerk-Teilnehmern auf den Rückweg in das vom Steuerknoten ausgegebene oder ein weiteres vom Steuerknoten versandtes Datentelegramm eingeschrieben. Der Steuerknoten verarbeitet nach Empfang des Datentelegramms die Eingangsdaten dann im nächsten Steuerprozesszyklus. Das Datentelegramm durchläuft also alle Netzwerk-Teilnehmer im Netzwerk zweimal, auf dem Hinweg des Datenpfads, um die Ausgangsdaten des vorausgehenden Steuerzyklus in die Netzwerk-Teilnehmer einzuschreiben, und auf dem Rückweg, um die Eingangsdaten für den nächsten Steuerzyklus einzulesen.

Um erfindungsgemäß die Durchlaufzeit der für einen Steuerprozess erforderlichen Daten durch das Netzwerk zu verkürzen, wird so vorgegangen, dass der Steuerknoten die auf dem Datenpfad ausgegebenen Datentelegramme mit einer Kennung versieht und der Kopf-Teilnehmer, der in der Kette aus Netzwerk-Teilnehmern vom Steuerknoten aus gesehen, den Abschluss der Kette bildet, zusätzliche Funktionalitäten aufweist, nämlich eine Filterfunktionalität, um beim Durchlauf von Datentelegrammen durch den Kopf-Teilnehmer auf dem Hinweg anhand der vorgegebenen Kennung den Weitertransport der Datentelegramme mit der entsprechenden Kennung auf dem Rückweg zu verhindern, und eine Sendefunktionalität, um eigenständig Datentelegramme zu einem vorgegebenen Zeitpunkt auf dem Rückweg auszugeben.

Mit dieser Vorgehensweise besteht die Möglichkeit, die Datentelegramme zum Schreiben der Ausgangsdaten eines Steuerprozesses und zum Einlesen der Eingangsdaten für den nächsten Steuerprozess räumlich zu trennen und zeitlich unabhängig voneinander ausführen. Die Datentelegramme durchlaufen jeden Netzwerk-Teilnehmer nur einmal, die Schreib-Datentelegramme die Netzwerk-Teilnehmer auf dem Hinweg des Datenpfads und die Lese-Datentelegramme die Netzwerk-Teilnehmer auf dem Rückweg. Das Versenden der Schreib- bzw. Lese-Datentelegramme kann zeitgesteuert optimal auf die Zykluszeit des Steuerprozesses abgestimmt werden.

Ein Steuerprozess im Netzwerk wird auf folgende Weise ausgeführt. Der Steuerknoten gibt nach Abschluss eines Steuerprozesszyklus die Ausgangsdaten in Form eines Schreib-Datentelegramms auf dem Hinweg des Datenpfads aus, wobei die Netzwerk-Teilnehmer beim Durchlauf des Schreib-Datentelegramms auf dem Hinweg des Datenpfads die dem jeweiligen Netzwerk-Teilnehmer zugeordneten Ausgangsdaten aus dem Schreib-Datentelegramm auslesen. Jeder Netzwerk-Teilnehmer führt dann mit den ausgelesenen Ausgangsdaten einen lokalen Netzwerk-Teilnehmerprozess durch. Die sich bei diesem Netzwerk-Teilnehmerprozess ergebenden Eingangsdaten werden dann vom Kopf-Teilnehmer der Kette mit einem von diesem Kopf-Teilnehmer auf den Rückweg des Datenpfads ausgegebenen Lese-Datentelegramm eingesammelt und auf den Steuerknoten rückgekoppelt. Der Kopf-Teilnehmer blockiert gleichzeitig anhand der Kennung des Schreib-Datentelegramms den Weitertransport des Schreib-Datentelegramms nach dem Durchlauf auf dem Rückweg.

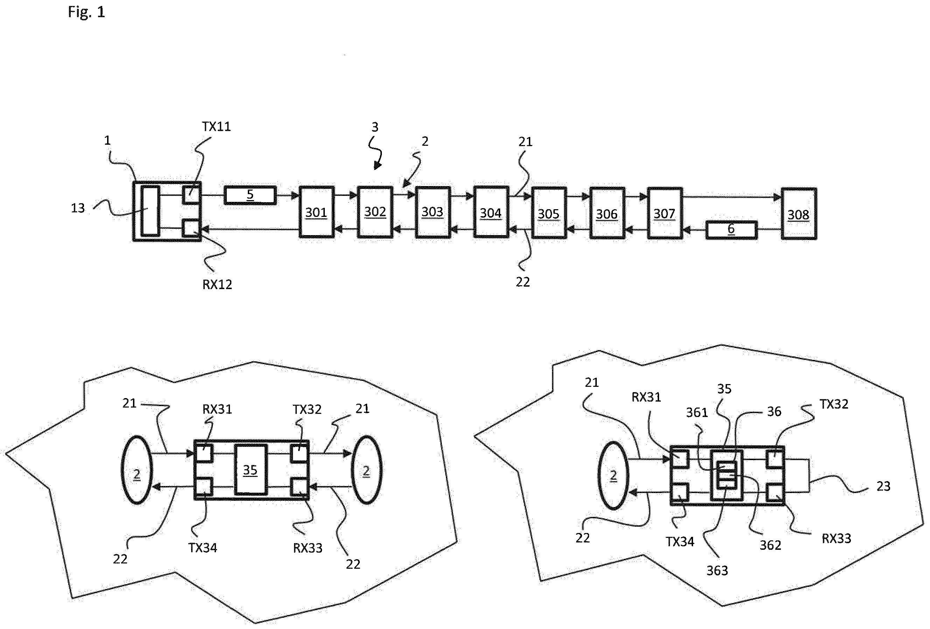

Figur 1 zeigt schematisch vorstehend erläuterte Netzwerkauslegung. Das Netzwerk weist einen Steuerknoten 1 auf, an dem über einen Datenpfad 2 eine Kette aus acht Netzwerk-Teilnehmern 3 angeschlossen ist, die in Fig. 1 fortlaufend mit 301, 302,..., 308 nummeriert sind. Der Datenpfad 2 weist einen Hinweg 21 und einen Rückweg 22 auf. Der Steuerknoten 1 weist eine Sendeeinheit TX11 und eine Empfangseinheit RX12 auf. Die Sendeeinheit TX11 ist über einen ersten Anschluss mit dem Hinweg 21 und die Empfangseinheit RX12 über einen zweiten Anschluss mit dem Rückweg 22 verbunden. Ferner enthält der Steuerknoten 1 eine Steuereinheit 13, die über Steuerleitungen an die Sendeeinheit TX11 und die Empfangseinheit RX12 angeschlossen ist.

Jeder der acht gezeigten Netzwerk-Teilnehmer 3 weist, wie die Detailansicht in Fig. 1 zeigt, zum Empfang der Datentelegramme von einem vorherigen Netzwerk-Teilnehmer über den Hinweg 21 einen ersten Anschluss mit einer ersten Empfangseinheit RX31 und zur Weitergabe an den nächsten Netzwerk-Teilnehmer über den Hinweg 21 einen zweiten Anschluss mit einer ersten Sendeeinheit TX32 auf. Ferner besitzt jeder Netzwerk-Teilnehmer zum Empfang der Datentelegramme über den Rückweg 22 von einem vorherigen Netzwerk-Teilnehmer einen dritten Anschluss mit einer zweiten Empfangseinheit RX33 und zur Weitergabe über den Rückweg 22 an den folgenden Netzwerk-Teilnehmer einen vierten Anschluss mit einer zweiten Sendeeinheit TX34. Zwischen die erste Empfangseinheit RX21 und die erste Sendeeinheit TX22 bzw. die zweite Empfangseinheit RX33 und die zweite Sendeeinheit TX34 ist eine Verarbeitungseinheit 35 in die die erste Empfangseinheit RX21 und die erste Sendeeinheit TX22 bzw. die zweite Empfangseinheit RX33 und die zweite Sendeeinheit TX34 verbindenden Steuerleitungen geschaltet, um einen Datenaustausch mit den durchlaufenden Datentelegrammen sowohl auf dem Hinweg 21 als auch auf dem Rückweg 22 des Datenpfads 2 durchzuführen.

Der Hinweg 21 und der Rückweg 22 des Datenpfads 2 sind durch den letzte Netzwerk-Teilnehmer 3 in der Kette, den Kopf-Teilnehmer 308, kurzgeschlossen. Der Kopf-Teilnehmer 308 ist analog zu den üblichen Netzwerk-Teilnehmern aufgebaut und weist, wie die Detailansicht in Fig. 1 zeigt, zusätzlich einen programmierbaren Speicherbereich 36 mit einem Telegrammspeicher 361, einem ersten Zwischenspeicher 362 und einem zweiten Zwischenspeicher 363 auf. Der programmierbare Speicherbereich 36 kann Teil des üblicherweise bereits in jedem Netzwerk-Teilnehmer 3 vorhandenen Speichers sein, der vorzugsweise in der Verarbeitungseinheit 35 integriert ist. Es besteht deshalb die Möglichkeit, grundsätzlich jeden Netzwerk-Teilnehmer als Kopf-Teilnehmer 308 einzusetzen. Am Kopf-Teilnehmer 308 sind die die erste Sendeeinheit TX32 und die zweite Empfangseinheit RX33 miteinander verbunden, um einen Kurzschluss 23 von Hinweg 21 und Rückweg 22 des Datenpfads 2 herzustellen.

In Figur 1 ist weiterhin gezeigt, dass der Steuerknoten 1 auf dem Hinweg 21 des Datenpfads 2 ein Schreib-Datentelegramm 5 ausgibt, während der Kopf-Teilnehmer 308 auf dem Rückweg ein Lese-Datentelegramm 6 abschickt. Beide Datentelegramme weisen vorzugsweise die gleiche Datenstruktur auf und setzen sich aus einem Header mit einer Empfangskennung und einer Ziel- und Quelladresse, einem Datenbereich sowie einem Trailer, der eine Paketlänge und einen Fehlererkennungsmechanismus umfasst, zusammen.

Zum Ausführen einer Steuerungsaufgabe enthält der zwischen dem Header und dem Trailer vorgesehene Datenbereich der Datentelegramme die für die Steuerungsaufgabe notwendigen Prozessdaten. Das vom Steuerknoten 1 ausgegebene Schreib-Datentelegramm 5 gibt dabei das Prozessabbild nach Abschluss eines Steuerprozesszyklus wieder, wobei die beim Steuerprozess ermittelten Ausgangsdaten für die angeschlossenen Netzwerk-Teilnehmer enthalten sind. Das Lese-Datentelegramm 5 dagegen dient dazu, die Eingangsdaten für den nächsten Steuerprozesszyklus des Steuerknotens 1 einzusammeln, die von Netzwerk-Teilnehmern 3 auf Grundlage der Ausgangsdaten des vorherigen Steuerprozesszyklus ermittelt werden.

Das Schreib-Datentelegramm 5 des Steuerknotens 1 wird, nachdem es alle Netzwerk-Teilnehmer 3 auf dem Hinweg 21 durchlaufen hat, vom Kopf-Teilnehmer 308 nach der Nutzdatenentnahme gelöscht. Weiterhin gibt der Kopf-Teilnehmer 308 das Lese-Datentelegramm 6 zeitgesteuert auf den Rückweg 22 aus, in das alle Netzwerk-Teilnehmer 3 einschließlich des Kopf-Teilnehmers 308 die für den Steuerknoten 1 vorgesehenen Nutzdaten einschreiben.

Durch die zusätzliche Filter- und Sendefunktionalität des Kopf-Teilnehmers 308 im Netzwerk kann das Schreiben und Lesen der Prozessdaten unabhängig voneinander mit eigenständigen Datentelegrammen durchgeführt werden, wobei jedes dieser Datentelegramme jeden Netzwerk-Teilnehmer 3 nur einmal, entweder auf dem Hinweg 21 oder dem Rückweg 22 des Datenpfads 2 durchlaufen muss. Mit dieser Vorgehensweise lässt sich die Durchlaufzeit der Prozessdaten im Netzwerk verkürzen. Insbesondere besteht die Möglichkeit, den Zeitpunkt zum Einlesen der Eingangsdaten der Netzwerk-Teilnehmer 3 für den nächsten Steuerprozesszyklus durch ein entsprechendes Steuern der Sendefunktionalität des Kopf-Teilnehmers 308 optimal auf den Zeitpunkt abzustellen, bei dem diese Eingangsdaten von den Netzwerk-Teilnehmern 3 zur Verfügung gestellt werden.

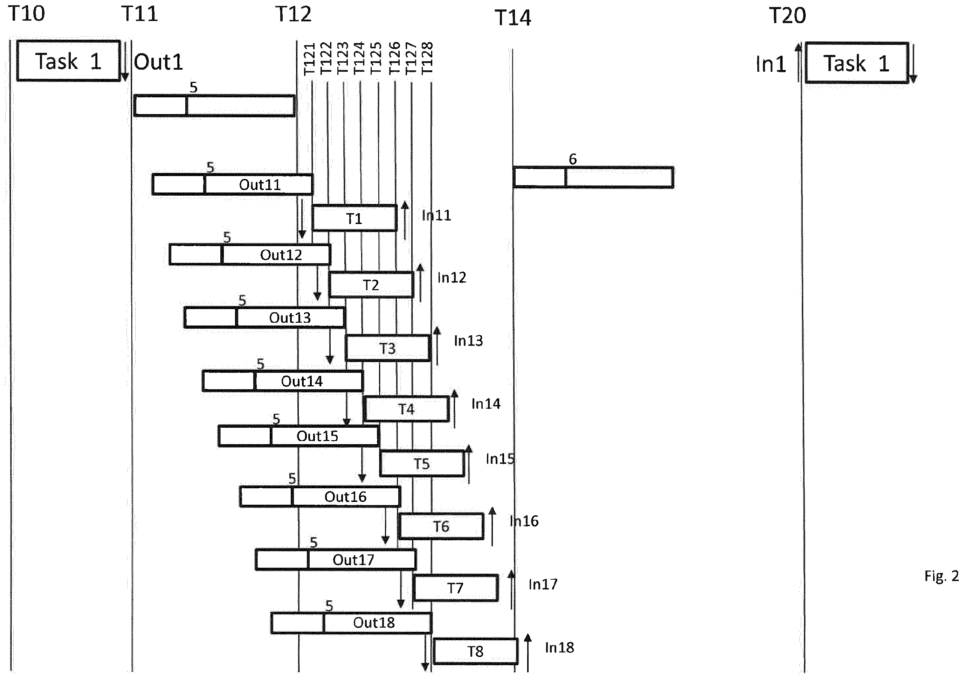

Der Prozessdatenaustausch mit Hilfe von Schreib- und Lese-Datentelegramme kann dabei in der in Figur 2 gezeigten Weise erfolgen. In Figur 2 ist der Prozessdatenaustausch zwischen zwei Zyklen eines Steuerprozesses Task1, der von der Steuereinheit 13 des Steuerknotens 1 ausgeführt wird, dargestellt.

Zum Zeitpunkt T10 wird ein erster Zyklus des Steuerprozesses Task1 ausgeführt. Die nach Abschluss des Steuerprozesses zur Verfügung stehenden Ausgangsdaten Out1 für die Netzwerk-Teilnehmer 3 werden dann von der Steuereinheit 13 des Steuerknotens 1 in das Schreib-Datentelegramm 5 umgesetzt, wobei jedem Netzwerk-Teilnehmer im Datenbereich ein Datenabschnitt zugewiesen ist: der erste Datenabschnitt dem ersten Netzwerk-Teilnehmer 301, der zweite Datenabschnitt dem zweiten Netzwerk-Teilnehmer 302 usw.

Der Steuerknoten 1 beginnt zum Zeitpunkt T11 mit der Ausgabe des Schreib-Datentelegramms 5 auf den Hinweg 21. Zum Zeitpunkt T12 ist das komplette Schreib-Datentelegramm 5 vom Steuerknoten 1 abgeschickt worden. Das Schreib-Datentelegramm 5 liegt dann am ersten dem Steuerknoten 1 nachgeordneten Netzwerk-Teilnehmer 301 der Kette an und ist dort zum Zeitpunkt T121 vollständig empfangen worden. Der Netzwerk-Teilnehmer 301 entnimmt beim Durchlauf des Schreib-Datentelegramms 5 die für den Netzwerk-Teilnehmer im Schreib-Datentelegramm vorgesehenen Ausgangsdaten Out11 und sendet das Schreib-Datentelegramm 5 dann zum nächsten Netzwerk-Teilnehmer 302 weiter. Mit den entnommenen Ausgangsdaten Out11 startet der Netzwerk-Teilnehmer 301 den lokalen Netzwerk-Teilnehmerprozess T1, aus dem sich dann die Eingangsdaten In11 des Netzwerk-Teilnehmers 301 für den nächsten Steuerprozesszyklus der Steuereinheit 1 ergeben. Zum Zeitpunkt T122 liegt das Schreib-Datentelegramm 5 dann komplett im Teilnehmer 302 vor, der die zugeordneten Ausgangsdaten Out12 entnimmt und den lokale Netzwerk-Teilnehmerprozess T2 beginnt. Derselbe Vorgang wiederholt sich bei allen weiteren Netzwerk-Teilnehmer 302,.., 307 der Kette bis zum Kopf-Teilnehmer 308. Zum Zeitpunkt T128 hat, wie Fig. 2 zeigt, dann der Kopf-Teilnehmer 308 das komplette Schreib-Datentelegramm 5 empfangen. Der Kopf-Teilnehmer 308 entnimmt dann die zugeordneten Ausgangsdaten aus dem Schreib-Datentelegramm 5 und stößt den lokalen Netzwerk-Teilnehmerprozess T8 an.

Die Prozesszyklen der lokalen Netzwerk-Teilnehmerprozesse T1,...,T8 der einzelnen Netzwerk-Teilnehmer können dabei, wie in Figur 2 gezeigt ist, gleich lang sein. Sie können jedoch auch eine unterschiedliche Zyklusdauer aufweisen. Wie in Figur 2 dargestellt, können die lokalen Netzwerk-Teilnehmerprozesse vom jeweiligen Netzwerk-Teilnehmer unmittelbar nach dem Einlesen der Ausgangsdaten angestoßen werden. Alternativ besteht jedoch auch die Möglichkeit, die lokalen Netzwerk-Teilnehmerprozesse zeitgesteuert zum gleichen Zeitpunkt anzustoßen. Ferner können die Datenabschnitte, die jedem Netzwerk-Teilnehmer zugewiesen sind, im Datenbereich des Schreib-Datentelegramms 5 in beliebiger Reihenfolge angeordnet sein.

Das Schreib-Datentelegramm 5 des Steuerknotens 1 wird nach seinem Durchlauf durch alle Netzwerk-Teilnehmer auf dem Hinweg 21 durch den Kopf-Teilnehmer 308 anhand seiner Kennung ausgefiltert und nicht mehr über den Kurzschluss 23 am Ausgang des Kopf-Teilnehmer 308 zwischen der ersten Sendeeinheit TX32 und der zweiten Empfangseinheit RX33 auf den Rückweg 22 auf den Steuerknoten 1 zurückgekoppelt. Für das vom Kopf-Teilnehmer 308 auf dem Rückweg 22 abgeschickte Lese-Datentelegramm 6 besteht deshalb keine Gefahr einer Kollision mit dem Schreib-Datentelegramm 5.

Zum Zeitpunkt T14 haben, wie Fig. 2 zeigt, alle Netzwerk-Teilnehmer 3 ihren lokalen Netzwerk-Teilnehmerprozess abgeschlossen. Der Kopf-Teilnehmer 308 startet dann zu diesem Zeitpunkt T14 auch mit der Ausgabe des Lese-Datentelegramms 6, das auf dem Rückweg 22 des Datenpfads 2 durch alle Netzwerk-Teilnehmer 3 hindurch zum Steuerknoten 1 übertragen wird. Für jeden Netzwerk-Teilnehmer 3 ist im Datenbereich des Lese-Datentelegramms 6 ein Datenabschnitt vorgesehen, in dem der entsprechende Netzwerk-Teilnehmer seine Eingangsdaten In11, ..., In18 aus dem lokalen Netzwerk-Teilnehmerprozess für den nächsten Steuerprozesszyklus des Steuerknotens 1 einlesen kann. Der erste Datenabschnitt dem Kopf-Teilnehmer 308, der zweite Datenabschnitt dem siebten Netzwerk-Teilnehmer 307 usw. Da das Lese-Datentelegramm 6 erst verschickt wird, wenn alle lokalen Netzwerk-Teilnehmerprozesse T1,..., T8 beendet sind und die einzulesenden Eingangsdaten In11,..., In18 zur Verfügung stehen, können alternativ, wie beim Schreib-Datentelegramm 5, die Datenabschnitte, die jedem Netzwerk-Teilnehmer zugewiesen sind, im Datenbereich des Lese-Datentelegramms 6 in beliebiger Reihenfolge angeordnet sein.

Jeder Netzwerk-Teilnehmer 3 trägt beim Durchlauf des Lese-Datentelegramms 6 die Eingangsdaten ein und sendet das Lese-Datentelegramm 6 dann zum nächsten Netzwerk-Teilnehmer weiter, bis das Lese-Datentelegramm 6 zum Zeitpunkt T20 dann vollständig im Steuerknoten 1 vorliegt. Mit den Eingangsdaten In1 startet die Steuereinheit 12 des Steuerknotens 1 dann den nächsten Zyklus des Steuerprozesses Task1.

Das Ausgeben des Lese-Datentelegramms 6 durch den Kopf-Teilnehmer 308 auf den Rückweg 22 erfolgt zeitgesteuert immer so, dass das Lese-Datentelegramm einen Netzwerk-Teilnehmer der Kette erst durchläuft, wenn der entsprechende lokale Netzwerk-Teilnehmerprozess abgeschlossen ist und die Eingangsdaten im Netzwerk-Teilnehmer zur Verfügung stehen, so dass der Netzwerk-Teilnehmer die Eingangsdaten ohne Verzögerung in den im Lese-Datentelegramm dafür vorgesehenen Datenabschnitt einblenden kann.

Der Kopf-Teilnehmer 308 kann das Lese-Datentelegramm 6 dabei, wie in Fig. 2 gezeigt ist, erst dann ausgeben, wenn alle lokalen Netzwerk-Teilnehmerprozesse abgeschlossen sind und die Eingangsdaten aller Netzwerk-Teilnehmer zum Einlesen in das Lese-Datentelegramm 6 bereitstehen. Alternativ kann der Kopf-Teilnehmer 308 jedoch das Lese-Datentelegramm 6 bei einer entsprechenden Zeitsteuerung bereits früher in den Rückweg 22 einspeisen. Die den einzelnen Netzwerk-Teilnehmern zugewiesenen Datenabschnitte sind im Datenbereich des Lese-Datentelegramms dann vorzugsweise so angeordnet, dass sie den jeweiligen Zeitpunkt, wann in den einzelnen Netzwerk-Teilnehmer die Eingangsdaten vorliegen, berücksichtigen.

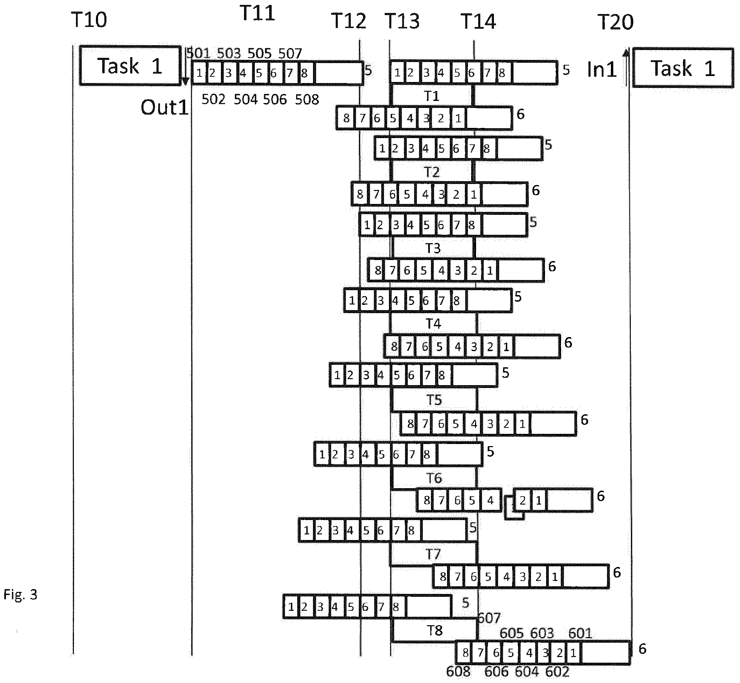

Eine Optimierung der Datenübertragung von Prozessdaten mit Hilfe von getrennten Schreib- und Lese-Datentelegrammen auf dem Hinweg 21 und dem Rückweg 22 des Datenpfads 2 ist in Figur 3 gezeigt. Die Ausgangsdaten Out1 für die Netzwerk-Teilnehmer 3 im Schreib-Datentelegramm 5 sind dann so angeordnet, dass die Ausgangsdaten für die Netzwerk-Teilnehmer in umgekehrter Reihenfolge zur Reihenfolge der Netzwerk-Teilnehmer in der Kette mit den Ausgangsdaten für den Kopf-Teilnehmer 308 zuerst sortiert sind. Im Schreib-Datentelegramm 5 ist dann der erste Datenabschnitt 508 dem Kopf-Teilnehmer 308, der zweite Datenabschnitt 507 dem siebten Netzwerk-Teilnehmer 307 usw. zugeordnet. Der jeweilige Datenabschnitt der Netzwerk-Teilnehmer 3 im Schreib-Datentelegramm 5 enthält zusätzlich eine vom Steuerknoten 1 für die Ausgangsdaten des jeweiligen Netzwerk-Teilnehmers berechnete Prüfsumme, die an die Ausgangsdaten angehängt ist.

In Figur 3 ist der Prozessdatenaustausch zwischen zwei Zyklen des Steuerprozesses Task1 mit einen solchen optimierten Schreib-Datentelegramm 5 gezeigt. Zum Zeitpunkt T10 wird der erste Zyklus des Steuerprozesses Task1 ausgeführt. Die nach Abschluss des Steuerprozesses zur Verfügung stehenden Ausgangsdaten für die Netzwerk-Teilnehmer 3 werden dann von der Steuereinheit 12 des Steuerknotens 1 in das optimierte Schreib-Datentelegramm 5 umgesetzt. Der Steuerknoten 1 beginnt zum Zeitpunkt T11 mit der Ausgabe des Schreib-Datentelegramms 5 auf den Hinweg 21.

Zum Zeitpunkt T12 ist das Schreib-Datentelegramm 5 komplett vom Steuerknoten 1 ausgegeben worden. Das Schreib-Datentelegramm 5 wird dann, wie Fig. 3 zeigt, durch die Netzwerk-Teilnehmer 3 der Kette solange auf dem Hinweg 21 weitergeleitet, bis der jeweilige dem Netzwerk-Teilnehmer zugeordnete Datenabschnitt mit den Ausgangsdaten sich im DurchlaufBereich des Netzwerk-Teilnehmer 3 befindet. Die Darstellung in Figur 3 zeigt weiter, dass die zugeordneten Datenabschnitte im Datenbereich des Schreib-Datentelegramms 5 von den einzelnen Netzwerk-Teilnehmern 3 in der Kette im Wesentlichen alle gleichzeitig zum Zeitpunkt T13 empfangen werden. Zum Zeitpunkt T13 hat der erste Netzwerk-Teilnehmer 301 in der Kette das Schreib-Datentelegramm 5 inklusive des dem Netzwerk-Teilnehmer 301 zugeordneten Datenabschnitts 501 empfangen. Der erste Netzwerk-Teilnehmer 301 entnimmt dann die Ausgangsdaten Out11 und beginnt den lokale Netzwerk-Teilnehmerprozess T1. Weiterhin liegt zum Zeitpunkt T13 das Schreib-Datentelegramm 5 auch im zweiten Netzwerk-Teilnehmer 302 der Kette inklusive des zugeordneten Datenabschnitts 502 vor, so dass die Ausgangsdaten Out12 entnommen und der lokale Netzwerk-Teilnehmerprozess T2 begonnen werden kann. Dasselbe gilt für allen weiteren Netzwerk-Teilnehmer 302,.., 307 der Kette einschließlich des Kopf-Teilnehmer 308. Zum Zeitpunkt T13 haben dann alle Netzwerk-Teilnehmer 3 den zugeordneten Datenabschnitt des Schreib-Datentelegramms 5 empfangen, um die Ausgangsdaten aus dem Schreib-Datentelegramm 5 zu entnehmen und ihren lokalen Netzwerk-Teilnehmerprozess anzustoßen.

Durch die zur Reihenfolge der Netzwerk-Teilnehmer in der Kette umgekehrte Reihenfolge der den jeweiligen Netzwerk-Teilnehmern zugeordneten Datenabschnitte im Datenbereich des Schreib-Datentelegramms wird erreicht, dass die jeweiligen Ausgangsdaten von allen Netzwerk-Teilnehmern im Wesentlichen gleichzeitig eingelesen werden können. Dies ist z. B. dann gegeben, wenn die Durchlaufzeit für die Datentelegramm-Verarbeitung je Netzwerk-Teilnehmer 0,5 µsec beträgt, wobei jedem Netzwerk-Teilnehmer ein Datenabschnitt von 60 Byte im Schreib-Datentelegramm 5 zugewiesen ist. Bei einer Datenübertragungsrate von 1 GBaud, bei der die Übertragung von 60 Bytes (60*8=480 Bits) 0,48 µsec dauert, ist somit die Übertragungszeit der Daten eines Netzwerk-Teilnehmers 3 (0,048 µsec) ungefähr gleich der Durchlaufzeit durch einen Netzwerk-teilnehmer 3 (0,5 µsec), daher liegen dann in allen acht Netzwerk-Teilnehmern 3 die Ausgangsdaten im Wesentlichen gleichzeitig vor, nämlich zum Zeitpunkt T13, wie in Figur 3 gezeigt ist. Die Netzwerk-Teilnehmer 3 können dann alle nach dem Einlesen ihrer Ausgangsdaten im Wesentlichen gleichzeitig ihren lokalen Netzwerk-Teilnehmerprozess anstoßen.

Dadurch dass die den einzelnen Netzwerk-Teilnehmern 3 zugeordneten Ausgangsdaten jeweils eine eigene Prüfsumme aufweisen, besteht darüber hinaus die Möglichkeit, dass jeder Netzwerk-Teilnehmer, ohne das gesamte Schreib-Datentelegramm 5 empfangen und auswerten zu müssen, bereits nach Einlesen seines Datenabschnitts im Schreib-Datentelegramm an der seinen Ausgangsdaten zugeordneten Prüfsumme eine fehlerfreie Übertragung verifizieren kann. Der Netzwerk-Teilnehmer muss also nicht den Durchlauf des gesamten Schreib-Datentelegramms abwarten, bevor er seinen lokalen Netzwerk-Teilnehmerprozess anstößt.

Eine weitere Optimierung hinsichtlich der Durchlaufzeit kann erreicht werden, indem, wie in Fig. 3 weiter gezeigt ist, im vom Kopf-Teilnehmer 308 ausgesandten Lese-Datentelegramm 6 die Datenabschnitte 601, ..., 608 so angeordnet sind, dass die Eingangsdaten der Netzwerk-Teilnehmer im Datenbereich des Lese-Datentelegramms 6 in der Reihenfolge der Netzwerk-Teilnehmer in der Kette, mit den Eingangsdaten des Kopf-Teilnehmers 308 zuletzt, sortiert sind. Der Kopf-Teilnehmer 308 kann dann zeitgesteuert das Lese-Datentelegramm 6 bereits auf dem Rückweg 22 des Datenpfads 2 ausgeben, bevor alle Netzwerk-Teilnehmer ihren lokalen Netzwerk-Teilnehmerprozess zum Zeitpunkt T14 beendet haben.

Das Datentelegramm 6 wird vom Kopf-Teilnehmer 308 so ausgeben, dass der letzte Datenabschnitt 608 des Lese-Datentelegramms 6 vom Kopf-Teilnehmer 308 erst gesendet wird, wenn der lokale Netzwerk-Teilnehmerprozess T8 beendet ist, so dass neue Eingangsdaten In18 im Datenabschnitt 608 eingetragen werden können. Weiterhin wird das Lese-Datentelegramm 6 so gesendet, dass vom vorletzten Netzwerk-Teilnehmer 307 der Kette der Datenabschnitt 607 erst weitergeleitet wird, wenn im Netzwerk-Teilnehmer 307 der lokale Netzwerk-Teilnehmer Prozess T7 beendet und die neue Eingangsdaten In17 in den Datenabschnitt 607 eingetragen werden können. Dasselbe gilt für allen weiteren Netzwerk-Teilnehmer 306,.., 301 der Kette in Bezug auf den zugeordneten Datenabschnitt 606,..., 601 im Lese-Datentelegramm 6.

Der Zeitpunkt der Ausgabe des Lese-Datentelegramms 6 auf dem Rückweg 22 wird vom Kopf-Teilnehmer 308 zeitgesteuert so gewählt, dass aufgrund der Durchlaufzeit durch die Netzwerk-Teilnehmer der den Netzwerk-Teilnehmer zugeordnete Datenabschnitt im Lese-Datentelegramm 6 im entsprechenden Netzwerk-Teilnehmer vorliegt, wenn dessen lokaler Netzwerk-Teilnehmerprozess beendet ist und die sich dabei ergebenden Eingangsdaten vorliegen. Die Netzwerk-Teilnehmer 3 können dann, wie der Zeitablauf in Figur 3 zeigt, im Wesentlichen gleichzeitig ihre Eingangsdaten in das Lese-Datentelegramm einlesen, das dann zum Zeitpunkt T20 wieder vollständig beim Steuerknoten 1 vorliegt, der daraufhin den nächsten Steuerprozesszyklus Task1 starten kann.

Der Kopf-Teilnehmer 308 ist so programmiert, dass er die vom Steuerknoten 1 ausgesandten Schreib-Datentelegramme anhand der Datentelegramm-Kennung ausfiltert. Hierzu untersucht der Kopf-Teilnehmer 308 die im Header des Schreib-Datentelegramms 5 enthaltene Datentelegramm-Kennung. Dies erfolgt vorzugsweise so, dass der Kopf-Teilnehmer 308 die ausgelesene Datentelegramm-Kennung mit Datentelegramm-Kennungen, die in dem Telegrammspeicher 361 des konfigurierbaren Speicherbereichs 36 enthalten sind, vergleicht. Bei einer Übereinstimmung der Kennungen wird das Schreib-Datentelegramm 5 an seinem Weitertransport auf dem Rückweg 21 des Datenpfads 2 gehindert, vorzugsweise wird es vom Kopf-Teilnehmer 308 gelöscht.

Als weitere Sicherungsmaßnahme neben einer Prüfsumme enthalten die Schreib-Datentelegramme vorzugsweise ein zusätzliches Registerdatenfeld, auch Working Counter genannt, das vom Steuerknoten 1 mit einem Startwert versehen ist. Die Netzwerk-Teilnehmer sind dann ausgelegt, dass sie das Registerdatenfeld des durchlaufenen Datentelegramms bei einem Datenaustausch mit dem entsprechenden Datentelegramm inkrementieren. Anhand des Wertes im Registerdatenfeld kann der Steuerknoten 1 dann, wenn das Datentelegramm nach dem Umlauf auf dem ringförmigen Datenpfad wieder vom Steuerknoten 1 empfangen wird, feststellen, ob die Netzwerk-Teilnehmer den Datenaustausch korrekt ausgeführt haben.

Um die Sicherungsmaßnahme auch dann für den Steuerknoten 1 zugänglich zu machen, wenn das Schreib-Datentelegramm, wie erfindungsgemäß vorgesehen, durch den Kopf-Teilnehmer 308 ausgefiltert wird, ist der Kopf-Teilnehmer 308 vorzugsweise so ausgelegt, dass er den Wert des Registerfeldes des Schreib-Datentelegramms 5 vor dem Löschen ausliest und im ersten Zwischenspeicher 362 ablegt. Der zwischengespeicherte Wert des Registerfeldes des Schreib-Datentelegramms 5 kann dann mit dem Lese-Datentelegramm 6, das vom Kopf-Teilnehmer 308 auf den Rückweg 22 ausgegeben wird, an den Steuerknoten 1 zur Auswertung zurückgesandt werden.

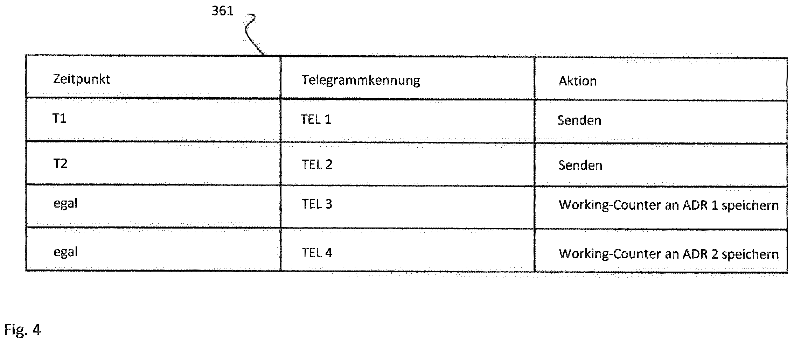

Der im Kopf-Teilnehmer 308 vorgesehene Telegrammspeicher 361 wird vorzugsweise durch den Steuerknoten 1 in der Hochlaufphase des Netzwerks konfiguriert. Der Steuerknoten 1 gibt dem Kopf-Teilnehmer 308 die Datentelegramm-Kennungen der an der Weiterleitung zu blockierenden Schreib-Datentelegramme und die Zeitpunkte zum Verschicken der Lese-Datentelegramme vor. Weiterhin kann der Steuerknoten 1 im konfigurierbaren Telegrammspeicher 361 die vom Kopf-Teilnehmer 308 mit den Datentelegrammen auszuführenden Aktionen, d. h. Senden oder Blockieren oder auch das Auslesen des Registerfeldes eines zu blockierenden Schreib-Datentelegramms vorgeben. Figur 4 zeigt ein mögliches Aussehen des Telegrammspeichers 361 im Kopf-Teilnehmer 308. Der Telegrammspeicher weist drei Spalten auf, in denen Zeitpunkt, Telegrammkennung und auszuführende Aktion, z. B. Working Counter an Adresse ADR1 im ersten Zeichenspeicher 361 ablegen, abgespeichert sind.

Mit dem vorstehend erläuterten Datenaustauschverfahren besteht die Möglichkeit, indem im Voll-Duplex-Datenübertragungsverfahren Lesen und Schreiben der Prozessdaten unabhängig voneinander erfolgen und jedes Datentelegramm jeden Netzwerk-Teilnehmer nur einmal durchlaufen muss, die Datendurchlaufzeiten zu optimieren. Da der Datenaustausch zyklisch erfolgt, kann durch eine entsprechende Zeitsteuerung gewährleistet werden, dass auch dann, wenn mehrere Steueraufgaben parallel ausgeführt werden, die zugehörigen Schreib- und Lese-Datentelegramme kollisionsfrei auf dem Hinweg bzw. Rückweg übertragen werden.

Neben den zyklischen Datenübertragungsvorgängen zum Umlauf von Prozessdaten von Steuerungsaufgaben werden jedoch in Netzwerken insbesondere auch in der Automatisierungstechnik auch azyklische Datenübertragungsvorgänge durchgeführt, z.B. um Parameter zu den einzelnen Geräten der Sensor-/Aktorebene zu übertragen oder Statusdaten abzufragen. Die Datenübertragung erfolgt in der Regel so, dass zwischen den zyklischen Datentelegrammen auch azyklische Datentelegramme auf dem Datenpfad 2 vom Steuerknoten 1 zu den Netzwerk-Teilnehmern 3 übertragen und von den Netzwerk-Teilnehmern 3 dann an den Steuerknoten 1 wieder zurückgesandt werden.

Der Kopf-Teilnehmer 308 koppelt die azyklischen Datentelegramme über den Kurzschluss 23 von der ersten Sendeeinheit TX32 mit der zweiten Empfangseinheit RX33 vom Hinweg 21 auf den Rückweg 22 des Datenpfads 2 zurück. Azyklische Datentelegramme erkennt der Kopf-Teilnehmer 308 dabei vorzugsweise dadurch, dass die im Header der azyklischen Datentelegramme enthaltene Kennung nicht mit einer der im konfigurierbaren Telegrammspeicher des Kopf-Teilnehmers abgespeicherten Kennungen übereinstimmt. Dies zeigt dem Kopf-Teilnehmer 308 dann an, dass das entsprechende azyklische Datentelegramm nicht von der Weiterleitung auf dem Rückweg blockiert werden soll.

Bei dieser Rückkopplung der azyklischen Datentelegramme durch den Kopf-Teilnehmer 308 vom Hinweg 21 auf den Rückweg 22 des Datenpfads 2 besteht die Gefahr, dass die azyklischen Datentelegramme mit einem zeitgesteuerten Lese-Datentelegramm 6 des Kopf-Teilnehmers kollidieren. Um dies zu verhindern, weist der Kopf-Teilnehmer, wie in Figur 1 gezeigt, zusätzlich den zweiten Zwischenspeicher 363, vorzugsweise ein FIFO-Speicher auf, der ausgelegt ist, dann, wenn der Kopf-Teilnehmer 308 feststellt, dass zeitgleich mit dem azyklischen Datentelegramm ein Lese-Datentelegramm 6 abgeschickt werden soll, das azyklische Datentelegramm zwischenspeichert und erst dann weiterleitet, wenn der Rückweg wieder frei ist.

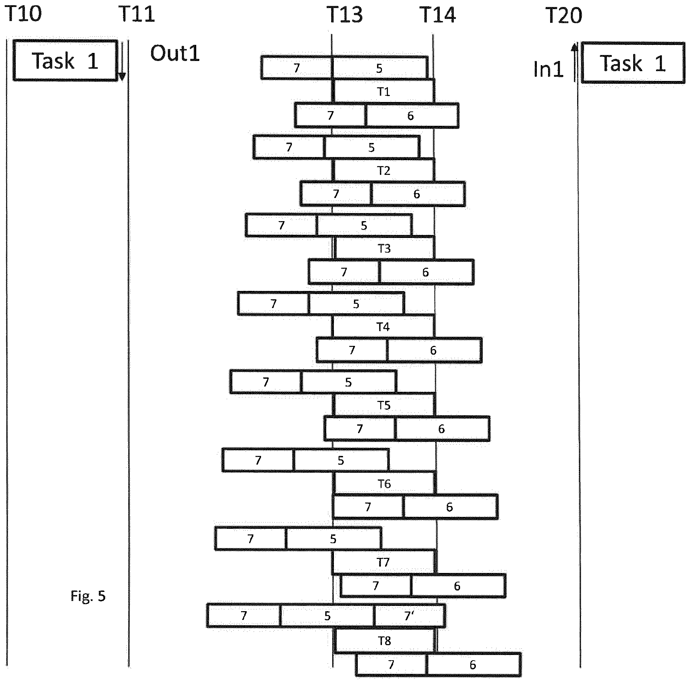

Figur 5 zeigt den Prozessdatenaustausch aus Fig. 3, wobei zusätzlich nach dem Schreib-Datentelegramm 5 ein azyklisches Datentelegramm 7 vom Steuerknoten auf dem Hinweg 21 des Datenpfads 2 ausgegeben wird In Figur 5 ist dabei das Schreib-Datentelegramm 5 zum Zeitpunkt T13 gezeigt, zum dem alle Netzwerk-Teilnehmer 3 den zugeordneten Datenabschnitt des Schreib-Datentelegramms 5 empfangen haben, um die Ausgangsdaten aus dem Schreib-Datentelegramm 5 zu entnehmen und ihren lokalen Netzwerk-Teilnehmerprozess anzustoßen. Wie Fig. 5 zeigt, steht das vom Steuerknoten 1 anschließend an das Schreib-Datentelegramm 5 gesendeten azyklischen Datentelegramm 7 zum Zeitpunkt T13 am ersten Netzwerk-Teilnehmer 301 der Kette an.

Weiterhin ist in Figur 5 das Lese-Datentelegramm 6 zum Zeitpunkt T14 dargestellt, zu dem alle Netzwerk-Teilnehmer 3 ihren lokalen Netzwerk-Teilnehmerprozess abgeschlossen haben. Das Datentelegramm 6 wird vom Kopf-Teilnehmer 308 so ausgeben, dass zum Zeitpunkt T14 der letzte Datenabschnitt 608 des Lese-Datentelegramms 6 sich noch im Kopf-Teilnehmer 308 befindet, so dass neue Eingangsdaten in den Datenabschnitt 608 eingetragen werden können. Wie in Fig. 5 weiter gezeigt, schließt sich das azyklischen Datentelegramm 7 an das Lese-Datentelegramm 6 an und befindet sich zum Zeitpunkt T14 noch vollständig im Kopf-Teilnehmer 308. Das azyklische Datentelegramm 7 wird dabei vom Kopf-Teilnehmer 308 zwischengespeichert und erst nach dem Abschicken des Lese-Datentelegramms 6 auf dem Rückweg 22 weitergeleitet. Wenn das azyklische Datentelegramm 7 ohne Zwischenspeicherung vom Kopf-Teilnehmer 308 weitergeleitet worden wäre, hätte das azyklische Datentelegramm (gekennzeichnet als 7' in Fig. 5) den Kopf-Teilnehmer 308 eigentlich bereits teilweise wieder verlassen, so dass es zu einer Kollision mit dem Lese-Datentelegramm auf dem Rückweg 22 gekommen wäre.

## Patentansprüche

1. Netzwerk mit einem Steuerknoten (1) und einer Mehrzahl von Netzwerk-Teilnehmern, die über einen geschlossenen ringförmigen Datenpfad mit dem Steuerknoten (1) verbunden sind, wobei die Netzwerk-Teilnehmer ausgehend vom Steuerknoten (1) eine Kette mit einem Kopf-Teilnehmer (308) als Abschluss der Kette bilden und der ringförmige Datenpfad die Netzwerk-Teilnehmer jeweils auf einem Hinweg und einem Rückweg durchläuft,
wobei der Steuerknoten (1) ausgelegt ist, Datentelegramme (5, 7) mit Kennungen auf den Datenpfad auszugeben,
wobei die Netzwerk-Teilnehmer (3) ausgelegt sind, mit auf dem ringförmigen Datenpfad durchlaufenden Datentelegrammen sowohl auf dem Hinweg als auch auf dem Rückweg einen Datenaustausch durchzuführen, und
wobei der Kopf-Teilnehmer (308) der Kette eine Filterfunktionalität, um nach dem Durchlauf von Datentelegrammen durch den Kopf-Teilnehmer (308) auf dem Hinweg anhand einer vorgegebenen Kennung den Weitertransport von Datentelegrammen (5) mit der entsprechenden Kennung auf dem Rückweg zu blockieren, und eine Sendefunktionalität, um Datentelegramme (6) zu vorgegebenen Zeitpunkten auf den Rückweg auszugeben, aufweist.

2. Netzwerk nach Anspruch 1, wobei der Steuerknoten (1) ausgelegt ist, zyklisch einen Steuerprozess durchzuführen, um auf der Grundlage von Eingangsdaten der Netzwerk-Teilnehmer Ausgangsdaten für die Netzwerk-Teilnehmer zu ermitteln, wobei der Steuerknoten (1) nach Abschluss eines Steuerprozesszyklus die Ausgangsdaten in Form wenigstens eines Schreib-Datentelegramms (5) auf den Hinweg des Datenpfads ausgibt, wobei die Netzwerk-Teilnehmer beim Durchlauf des Schreib-Datentelegramms auf dem Hinweg des Datenpfads dem jeweiligen Netzwerk-Teilnehmer zugeordnete Ausgangsdaten aus dem Schreib-Datentelegramm (5) auslesen, wobei jeder Netzwerk-Teilnehmer (3) ausgelegt ist, zyklisch einen Netzwerk-Teilnehmerprozess durchzuführen, um auf der Grundlage der ausgelesenen Ausgangsdaten Eingangsdaten für den nächsten Steuerprozess des Steuerknotens (1) zu ermitteln, wobei der Kopf-Teilnehmer (308) der Kette nach dem Durchlauf des Schreib-Datentelegramms (5) durch den Kopf-Teilnehmer (308) den Weitertransport des Schreib-Datentelegramms auf dem Rückweg blockiert und zu einem vorgegebenen Zeitpunkt ein Lese-Datentelegramm (6) auf den Rückweg des Datenpfads ausgibt, wobei die Netzwerk-Teilnehmer (3) beim Durchlauf des Lese-Datentelegramms (6) auf den Rückweg des Datenpfads die Eingangsdaten des Netzwerk-Teilnehmers für den nächsten Steuerprozesszyklus in das Lese-Datentelegramm (6) einlesen.

3. Netzwerk nach Anspruch 2, wobei der vorgegebene Zeitpunkt für das Ausgeben des Lese-Datentelegramms (6) auf den Rückweg des Datenpfads durch den Kopf-Teilnehmer (308) so gewählt ist, dass ein einem Netzwerk-Teilnehmer zugeordneter Datenbereich im Lese-Datentelegramm (6) erst nach dem Abschluss des Netzwerk-Teilnehmerprozesses durch den entsprechenden Netzwerk-Teilnehmer läuft.

4. Netzwerk nach Anspruch 2 oder 3, wobei der Steuerknoten (1) ausgelegt ist, die Ausgangsdaten für die Netzwerk-Teilnehmer in dem Schreib-Datentelegramm (5) so anzuordnen, dass die Ausgangsdaten für die Netzwerk-Teilnehmer in umgekehrter Reihenfolge zur Reihenfolge der Netzwerk-Teilnehmer in der Kette, mit den Ausgangsdaten für den Kopf-Teilnehmer (308) zuerst, sortiert sind.

5. Netzwerk nach Anspruch 4, wobei der Steuerknoten (1) ausgelegt ist, für die Ausgangsdaten jedes Netzwerk-Teilnehmers eine eigene Prüfsumme zu ermitteln und in dem Schreib-Datentelegramm (5) zusammen mit den Ausgangsdaten jedes Netzwerk-Teilnehmers mit zu übertragen.

6. Netzwerk nach Anspruch 2 oder 5, wobei der Kopf-Teilnehmer (308) ausgelegt ist, die für die Netzwerk-Teilnehmer (3) vorgesehenen Datenbereiche im Lese-Datentelegramm (6) so anzuordnen, dass die Eingangsdaten der Netzwerk-Teilnehmer im Lese-Datentelegramm (6) in der Reihenfolge der Netzwerk-Teilnehmer in der Kette, mit den Eingangsdaten des Kopf-Teilnehmer (308) zuletzt, sortiert sind.

7. Netzwerk nach einem der Ansprüche 1 bis 6, wobei der Steuerknoten (1) ausgelegt ist, die Datentelegramme mit einem Startwert enthaltenden Registerfeld zu versehen,
wobei die Netzwerk-Teilnehmer ausgelegt sind, das Registerfeld der auf dem Datenpfad durchlaufenden Datentelegramme bei einem Datenaustausch mit dem entsprechenden Datentelegramm zu inkrementieren, und
wobei der Kopf-Teilnehmer (308) ausgelegt ist, bei Datentelegrammen, die der Kopf-Teilnehmer (308) auf dem Hinweg anhand der vorgegebenen Kennung am Weitertransport auf dem Rückweg blockiert, den Wert des Registerfeldes auszulesen und zwischenzuspeichern, um den zwischengespeicherten Wert zu einem späteren Zeitpunkt mit einem von dem Kopf-Teilnehmer (308) auf den Rückweg ausgegebenen Datentelegramm an den Steuerknoten (1) zu versenden.

8. Netzwerk nach einem der Ansprüche 1 bis 7, wobei der Kopf-Teilnehmer (308) einen konfigurierbaren Telegrammspeicher (361) für die Filterfunktionalität und die Sendefunktionalität aufweist, der die Kennungen der Datentelegramme, deren Weitertransport auf dem Rückweg des Datenpfads blockiert werden soll, und die vorgegebenen Zeitpunkte zum Ausgeben der Datentelegramme auf den Rückweg enthält.

9. Netzwerk nach einem der Ansprüche 1 bis 8, wobei der Kopf-Teilnehmer (308) einen Zwischenspeicher (363) aufweist, der ausgelegt ist, azyklisch vom Steuerknoten (1) gesendete Datentelegramme zwischenzuspeichern, wenn das Weiterleiten des azyklisch vom Steuerknoten (1) gesendeten Datentelegramms auf dem Rückweg des Datenpfads mit einem vom Kopf-Teilnehmer (308) auf dem Rückweg zu versendenden Datentelegramm kollidieren würde.

10. Kopf-Teilnehmer zur Verwendung in einem Netzwerk nach einem der Ansprüche 1 bis 9, der eine Filterfunktionalität, um nach dem Durchlauf von Datentelegrammen durch den Kopf-Teilnehmer anhand einer vorgegebenen Kennung den Weitertransport von Datentelegrammen zu blockieren, und eine Sendefunktionalität, um Datentelegramme zu vorgegebenen Zeitpunkten auszugeben, aufweist.

11. Datenübertragungsverfahren zum Betreiben eines Netzwerks nach einem der Ansprüche 1 bis 9.

## Claims

1. Network having a control node (1) and a plurality of network subscribers that are connected to the control node (1) via a closed ring-shaped data path,
wherein the network subscribers form a chain, starting from the control node (1), with a head subscriber (308) as a termination for the chain, and the ring-shaped data path transits through the network subscribers on both an outbound route and an inbound route,
wherein the control node (1) is designed to output data messages (5, 7) with identifiers onto the data path, wherein the network subscribers (3) are designed to perform data interchange on the outbound route and on the inbound route with data messages transiting through on the ring-shaped data path, and
wherein the head subscriber (308) in the chain has a filter functionality, in order to use a prescribed identifier to block the further transport of data messages (5) with the corresponding identifier on the inbound route following transit of data messages through the head subscriber (308) on the outbound route, and a transmission functionality, in order to output data messages (6) onto the inbound route at prescribed instants.

2. Network according to Claim 1, wherein the control node (1) is designed to cyclically perform a control process in order to ascertain output data for the network subscribers on the basis of input data of the network subscribers, wherein the control node (1), following termination of a control process cycle, outputs the output data in the form of at least one write data message (5) onto the outbound route of the data path, wherein the network subscribers, on transit of the write data message on the outbound route of the data path, read output data associated with the respective network subscriber from the write data message (5), wherein each network subscriber (3) is designed to cyclically perform a network subscriber process in order to ascertain input data for the next control process of the control node (1) on the basis of the output data that have been read, wherein the head subscriber (308) in the chain, following transit of the write data message (5) through the head subscriber (308), blocks the further transport of the write data message on the inbound route and outputs a read data message (6) onto the inbound route of the data path at a prescribed instant, wherein the network subscribers (3), on transit of the read data message (6) on the inbound route of the data path, read the input data of the network subscriber for the next control process cycle into the read data message (6).

3. Network according to Claim 2, wherein the prescribed instant for the output of the read data message (6) onto the inbound route of the data path is chosen by the head subscriber (308) such that a data area associated with a network subscriber in the read data message (6) transits through the corresponding network subscriber only following termination of the network subscriber process.

4. Network according to Claim 2 or 3, wherein the control node (1) is designed to arrange the output data for the network subscribers in the write data message (5) such that the output data for the network subscribers are sorted in reverse order with respect to the order of the network subscribers in the chain, with the output data for the head subscriber (308) first.

5. Network according to Claim 4, wherein the control node (1) is designed to ascertain a separate checksum for the output data from each network subscriber and to include it in the transmission in the write data message (5) together with the output data from each network subscriber.

6. Network according to Claim 2 or 5, wherein the head subscriber (308) is designed to arrange the data areas provided for the network subscribers (3) in the read data message (6) such that the input data of the network subscribers are sorted in the read data message (6) in the order of the network subscribers in the chain, with the input data of the head subscriber (308) last.

7. Network according to one of Claims 1 to 6, wherein the control node (1) is designed to provide the data messages with a register field containing a starting value, wherein the network subscribers are designed to increment the register field of the data messages transiting through on the data path in the event of a data interchange with the corresponding data message, and wherein the head subscriber (308) is designed to read and buffer-store the value of the register field for data messages that the head subscriber (308) blocks, on the outbound route using the prescribed identifier, from further transport on the inbound route in order to send the buffer-stored value to the control node (1) at a later instant with a data message that is output onto the inbound route by the head subscriber (308).

8. Network according to one of Claims 1 to 7, wherein the head subscriber (308) has a configurable message memory (361) for the filter functionality and the transmission functionality, which message memory contains the identifiers of the data messages that need to be blocked from being transported further on the inbound route of the data path and the prescribed instants for the output of the data messages onto the inbound route.

9. Network according to one of Claims 1 to 8, wherein the head subscriber (308) has a buffer store (363) that is designed to buffer-store data messages that are sent acyclically by the control node (1) if forwarding of the data message that is sent acyclically by the control node (1) on the inbound route of the data path would collide with a data message that is to be sent on the inbound route by the head subscriber (308).

10. Head subscriber for use in a network according to one of Claims 1 to 9, which has a filter functionality, in order to use a prescribed identifier to block the further transport of data messages following transit of data messages through the head subscriber, and a transmission functionality, in order to output data messages at prescribed instants.

11. Data transmission method for operating a network according to one of Claims 1 to 9.

## Revendications

1. Réseau comprenant un noeud de commande (1) et une pluralité de membres du réseau, lesquels sont reliés au noeud de commande (1) par le biais d'un chemin de données fermé en forme d'anneau, les membres du réseau formant, à partir du noeud de commande (1), une chaîne avec un membre de tête (308) faisant office de terminaison de chaîne et le chemin de données en forme d'anneau traversant les membres du réseau respectivement sur un trajet aller et un trajet retour,
le noeud de commande (1) étant conçu pour délivrer des télégrammes de données (5, 7) avec des identifiants sur le chemin de données,
les membres du réseau (3) étant conçus pour effectuer un échange de données avec les télégrammes de données qui parcourent le chemin de données en forme d'anneau à la fois sur le trajet aller et sur le trajet retour, et le membre de tête (308) de la chaîne possédant une fonctionnalité de filtrage pour, après le passage de télégrammes de données à travers le membre de tête (308) sur le trajet aller, bloquer à l'aide d'un identifiant prédéfini la poursuite du transport des télégrammes de données (5) ayant l'identifiant correspondant sur le trajet retour, et une fonctionnalité d'envoi pour délivrer des télégrammes de données (6) sur le trajet retour à des instants prédéfinis.

2. Réseau selon la revendication 1, le noeud de commande (1) étant conçu pour exécuter cycliquement un processus de commande afin de déterminer des données de sortie pour les membres du réseau en se basant sur les données d'entrée des membres du réseau, le noeud de commande (1), après l'achèvement d'un processus de commande, délivrant les données de sortie sous la forme d'au moins un télégramme de données d'écriture (5) sur le trajet aller du chemin de données, les membres du réseau lisant les données de sortie attribuées au membre du réseau correspondant depuis le télégramme de données d'écriture (5) lors du passage du télégramme de données d'écriture sur le trajet aller du chemin de données, chaque membre du réseau (3) étant conçu pour exécuter cycliquement un processus de membre de réseau afin de déterminer des données d'entrée pour le prochain processus de commande du noeud de commande (1) en se basant sur les données de sortie lues, le membre de tête (308) de la chaîne bloquant la poursuite du transport du télégramme de données d'écriture sur le trajet retour après le passage du télégramme de données d'écriture (5) à travers le membre de tête (308) et délivrant un télégramme de données de lecture (6) à un instant prédéfini sur le trajet retour du chemin de données, les membres du réseau (3) sur le trajet retour du chemin de données chargeant les données d'entrée du membre du réseau dans le télégramme de données de lecture (6) pour le cycle du processus de commande suivant pendant le passage du télégramme de données de lecture (6).

3. Réseau selon la revendication 2, l'instant prédéfini pour la délivrance du télégramme de données de lecture (6) sur le trajet retour du chemin de données par le membre de tête (308) étant choisi de telle sorte qu'une plage de données attribuée à un membre du réseau dans le télégramme de données de lecture (6) ne passe à travers le membre du réseau correspondant qu'après l'achèvement du processus de membre du réseau.

4. Réseau selon la revendication 2 ou 3, le noeud de commande (1) étant conçu pour disposer les données de sortie pour le membre du réseau dans le télégramme de données d'écriture (5) de telle sorte que les données de sortie pour les membres du réseau sont triées dans l'ordre inverse à l'ordre des membres du réseau dans la chaîne, avec les données de sortie pour le membre de tête (308) en premier.

5. Réseau selon la revendication 4, le noeud de commande (1) étant conçu pour déterminer une somme de contrôle propre pour les données de sortie de chaque membre du réseau et les transmettre dans le télégramme de données d'écriture (5) conjointement avec les données de sortie du membre du réseau correspondant.

6. Réseau selon la revendication 2 ou 5, le membre de tête (308) étant conçu pour disposer les plages de données prévues pour les membres du réseau (3) dans le télégramme de données de lecture (6) de telle sorte que les données d'entrée des membres du réseau dans le télégramme de données de lecture (6) sont triées dans l'ordre des membres du réseau dans la chaîne, avec les données d'entrée du membre de tête (308) en dernier.

7. Réseau selon l'une des revendications 1 à 6, le noeud de commande (1) étant conçu pour munir les télégrammes de données d'un champ de registre contenant une valeur de départ,
les membres du réseau étant conçus pour incrémenter le champ de registre des télégrammes de données qui passent sur le chemin de données lors d'un échange de données avec le télégramme de données correspondant, et le membre de tête (308) étant conçu pour, dans le cas des télégrammes de données dont le membre de tête (308), sur le trajet aller, bloque la poursuite du transport sur le trajet retour à l'aide de l'identifiant prédéfini, lire la valeur du champ de registre et la mémoriser temporairement afin d'envoyer la valeur mémorisée temporairement à un instant ultérieur au noeud de commande (1) avec un télégramme de données délivré par le membre de tête (308) sur le trajet retour.

8. Réseau selon l'une des revendications 1 à 7, le membre de tête (308) possédant une mémoire de télégramme (361) configurable pour la fonctionnalité de filtrage et la fonctionnalité d'envoi, laquelle contient les identifiants des télégrammes de données dont la poursuite du transport sur le trajet retour du chemin de données doit être bloquée ainsi que les instants prédéfinis pour la délivrance des télégrammes de données.

9. Réseau selon l'une des revendications 1 à 8, le membre de tête (308) possédant une mémoire temporaire (363) qui est conçue pour mémoriser temporairement les télégrammes de données envoyés de manière acyclique par le noeud de commande (1) lorsque le transfert des télégrammes de données envoyés de manière acyclique par le noeud de commande (1) sur le trajet retour du chemin de données entrerait en collision avec un télégramme de données à envoyer par le membre de tête (308) sur le trajet retour.

10. Membre de tête destiné à être utilisé dans un réseau selon l'une des revendications 1 à 9, lequel possède une fonctionnalité de filtrage pour, après le passage de télégrammes de données à travers le membre de tête, bloquer à l'aide d'un identifiant prédéfini la poursuite du transport des télégrammes de données, et une fonctionnalité d'envoi pour délivrer des télégrammes de données à des instants prédéfinis.

11. Procédé de transmission de données destiné à faire fonctionner un réseau selon l'une des revendications 1 à 9.
